Europäisches Patentamt

European Patent Office

Office européen des brevets

(11) Publication number: 0 520 157 A1

# EUROPEAN PATENT APPLICATION

(21) Application number: 92107166.8

(22) Date of filing: 27.04.92

(51) Int. Cl.5: G11B 5/64, G11B 5/704

(30) Priority: 24.06.91 JP 151685/91
25.06.91 JP 153362/91

(43) Date of publication of application:
30.12.92 Bulletin 92/53

(84) Designated Contracting States:
DE FR GB

(71) Applicant: NKK CORPORATION
1-2 Marunouchi 1-chome, Chiyoda-ku
Tokyo(JP)

(72) Inventor: Ohmura, Masanori
c/o Patent & License Dept NKK Corp
1-2, 1-chome Marunouchi Chiyoda-ku
Tokyo(JP)
Inventor: Suenaga, Hiroyoshi
c/o Patent & License Dept NKK Corp
1-2, 1-chome Marunouchi Chiyoda-ku
Tokyo(JP)
Inventor: Maeda, Tomoh
c/o Patent & License Dept NKK Corp
1-2, 1-chome Marunouchi Chiyoda-ku

Tokyo(JP)
Inventor: Sakiyama, Toshio
c/o Patent & License Dept NKK Corp
1-2, 1-chome Marunouchi Chiyoda-ku
Tokyo(JP)
Inventor: Kohama, Tatsuya
c/o Patent & License Dept NKK Corp
1-2, 1-chome Marunouchi Chiyoda-ku
Tokyo(JP)
Inventor: Okano, Yoko
c/o Patent & License Dept NKK Corp
1-2, 1-chome Marunouchi Chiyoda-ku
Tokyo(JP)
Inventor: Morita, Kenji
c/o Patent & License Dept NKK Corp
1-2, 1-chome Marunouchi Chiyoda-ku
Tokyo(JP)

(74) Representative: Sajda, Wolf E., Dipl.-Phys.
MEISSNER, BOLTE & PARTNER
Widenmayerstrasse 48 Postfach 86 06 24
W-8000 München 86(DE)

(54) Magnetic disk.

(57) A magnetic disc comprises a non-magnetic substrate, an ynderlying film (2) formed on the substrate (1), and a magnetic film (3) formed on the ynderlying film (2). The non-magnetic substrate (1) is formed of titanium or a titanium-based alloy. Also, the ynderlying film (2) is of a laminate structure of at least two layers (2a, 2b).

F I G . 1

The present invention relates to a magnetic disk using a titanium substrate, said disk exhibiting excellent noise characteristics.

In recent years, vigorous researches are being made in an attempt to increase the recording capacity and recording density of a magnetic disk. To achieve the object, various studies are being made in respect of the improvement and development of a non-magnetic disk substrate as well as magnetic thin films and underlying layers.

The magnetic disk substrate used nowadays is prepared by plating a Ni-P layer on the surface of an Aℓ alloy, followed by applying a surface finish treatment to the plating layer to have a predetermined surface accuracy. The conventional Aℓ alloy substrate of this type, however, is defective in that the rigidity of the substrate is low, making it difficult to decrease the thickness of the substrate which may be required in the future. Also, the Aℓ alloy substrate is low in its mechanical strength under high temperatures, making it difficult to form a magnetic film on the Aℓ alloy substrate by means of sputtering under high temperatures, which may also be required in the future.

Various measures for overcoming the difficulties noted above were proposed to date. For example, Published Unexamined Japanese Patent Application No. 52-105804 discloses an idea of using a titanium or a titanium alloy substrate as a metallic non-magnetic substrate. Further, Published Unexamined Japanese Patent Application No. 56-71821 also discloses an idea of using titanium or a titanium alloy for forming a substrate of a magnetic disk. It is proposed that a thin film is formed on the titanium or titanium alloy substrate, followed by applying an anodic oxidation to the thin film so as to prevent defects of the substrate from being propagated onto films to be formed above the thin film. Further, Published Unexamined Japanese Patent Application No. 59-151335 proposes an $\alpha$-titanium alloy substrate on which a Co-Cr film can be formed directly. Still further, Published Unexamined Japanese Patent Application No. 1-112521 proposes the use of a titanium alloy, which is hard and has a satisfactory surface roughness, as a magnetic disk substrate.

Most popular nowadays is a process using an Aℓ alloy substrate, i.e., a process in which a Ni-P plating is applied to an Aℓ alloy, followed by laminating a chromium layer and a magnetic layer on the Ni-P plating layer. Where the process noted above is applied to a titanium substrate, however, a difficulty is brought about that it is impossible to improve the electromagnetic properties of the conventional level. The difficulty is brought about because the bonding strength between titanium substrate and the Ni-P plating layer is not so high as the bonding strength between the Aℓ substrate and the Ni-P plating layer.

Under the circumstances, the present inventors prepared a disk by forming a non-magnetic film such as a Cr film on a titanium substrate without applying a Ni-P plating to the titanium substrate, followed by further forming a magnetic film, a protective film and a lubricating film on the non-magnetic film. When the electromagnetic properties of the disk thus prepared were measured, however, the disk was found to be poor in its noise properties, i.e., the capability of suppressing noises.

The problems pointed out above were not considered at all in the conventional magnetic disk using a titanium substrate. Naturally, substantially no attention has been paid to date to the underlying film and the magnetic film formed on the titanium substrate. As a matter of fact, improvements achieved to date in the undercoat film and the magnetic film relate to a magnetic disk comprising an Aℓ series substrate or a disk in which the substrate is of no importance in conjunction with the improvements achieved.

An object of the present invention, which has been achieved in view of the situation described above, is to provide a magnetic disk comprising a titanium disk and exhibiting excellent noise characteristics, i.e., capability of suppressing noises.

According to the present invention, there is provided a magnetic disk comprising a non-magnetic substrate, an underlying layer formed on the substrate, and a magnetic film formed on the underlying layer, in which the non-magnetic substrate is formed of titanium or a titanium-based alloy, and the underlying layer is of laminate structure of at least two layers.

Preferably, the maximum surface roughness $R_{max}$ of the substrate included in the magnetic disk of the present invention should be 0.08 $\mu$m.

This invention can be more fully understood from the following detailed description when taken in conjunction with the accompanying drawings, in which:

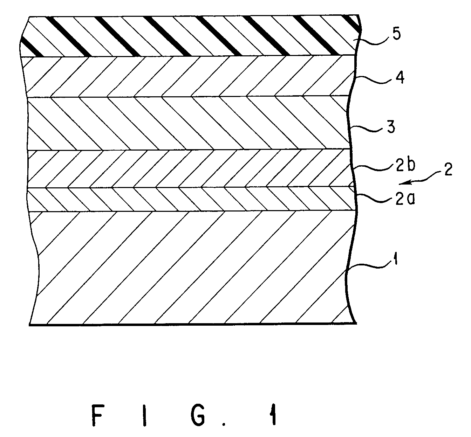

Fig. 1 is a cross sectional view showing a magnetic disk according to one embodiment of the present invention.

As a result of an extensive research made in an attempt to obtain a magnetic disk excellent in noise characteristics, i.e., low noise, by using a titanium substrate, the present inventors have found that a cause of poor noise characteristics inherent in the conventional magnetic disk prepared by laminating a Cr underlying layer and a magnetic film on a titanium substrate. Specifically, it has been found that, in the conventional magnetic disk, crystal defects of the titanium substrate adversely affect the Cr underlying layer. It has also been found that titanium atoms within the titanium substrate and other impurities are diffused into the Cr undercoat layer. These crystal defects and the impurity diffusion have been found to adversely affect the magnetic film in the conventional magnetic disk using a titanium substrate. The present inventors have further continued the research based on these findings, with the result that it has been clarified that the noise characteristics can be improved by using at least two non-magnetic underlying layers. Where the underlying layer is of a laminate structure of at least two layers, the magnetic film is not adversely affected by the crystal defects of the titanium substrate. Also, the magnetic film is not adversely affected by the diffusion of titanium atoms from the titanium substrate and of other impurities. In other words, it has been found that the underlying layer of a laminate structure permits fully absorbing the crystal defects of the titanium substrate and the element diffusion from the substrate, leading to the present invention.

The present invention thus achieved provides a magnetic disk comprising a titanium substrate and exhibiting excellent noise characteristics. The magnetic disk of the present invention comprises a titanium substrate, making it possible to decrease the thickness of the substrate itself and the disk. Further, the sputtering under high temperatures can be employed for forming a magnetic film.

Fig. 1 shows a magnetic disk according to one embodiment of the present invention. As shown in the drawing, the magnetic disk comprises a substrate 1 formed of titanium or a titanium-based alloy, an underlying layer 2 formed on the substrate 1, a magnetic film 3 formed on the underlying film 2, a protective film 4 formed on the magnetic film, and a lubricating film 5 formed on the protective film 4.

The underlying film 2, which is intended to prevent the magnetic film 3 from being adversely affected by the substrate 1, comprises a first layer 2a in direct contact with the substrate and a second layer 2b formed on the first layer 2a. In this embodiment, the underlying film 2 is of two-layer structure. However, it is of course possible for the underlying film 2 to be formed of three or more layers.

The thickness of the first layer 2a of the underlaying film 2 preferably falls within the range of between 30 Å and 10,000 Å. If the thickness of the first layer 2a is less than 30 Å, the underlying film 2 is incapable of sufficiently absorbing the crystal defects of the substrate and the impurity diffusion from the substrate. Where the thickness exceeds 10,000 Å, however, the flatness of the underlying film 2 is lowered, with the result that the bonding strength tends to be lowered between the underlying film 2 and the magnetic film 3 formed thereon. Preferably, the thickness of the first layer 2a should fall within a range of between 30 Å and 5,000 Å. Also, in view of the flatness of the underlying film 2, the maximum surface roughness $R_{max}$ of the substrate 1 should be 0.08 micron. The thickness of the entire underlying film 2 preferably falls within a range of between 100 Å and 11,000 Å. If the thickness of the underlying layers 2 is less than 100 Å, the effect of the underlying layer of two-layer structure is small. Where the thickness exceeds 10,000 Å, the flatness of the underlying layer is lowered.

The plurality of layers forming the underlying film 2 may or may not be equal to each other in composition, as far as the layers forming the underlaying film are discontinuous. In the case of forming discontinuous layers of the same composition, it is possible to change, for example, the temperature for forming the thin layers. It is desirable to use chromium for forming the underlying film 2 as in the prior art. In this case, a plurality of chromium layers are formed by changing the film-forming temperature so as to provide the underlying film. The underlying film formed of chromium permits enhancing the particular effect produced by the underlying film.

The second layer 2b of the underlying film 2, i.e., the layer in direct contact with the magnetic film 3, should desirably be formed of chromium. The use of a chromium layer permits positively imparting an in-plane anisotropy to the magnetic film.

The method of forming the underlying film is not particularly restricted in the present invention. For example, a conventional thin film-forming technique such as a sputtering technique can be employed for forming the underlying film.

The first layer 2a, which is in direct contact with the substrate 1, of the underlying film 2 may be formed of a material selected from the group consisting of titanium oxide, titanium carbide, and titanium nitride. The first layer 2a formed of the material exemplified above is substantially equal to a chromium layer in the produced effect, i.e., the effects of absorbing the crystal defects of the titanium substrate and of absorbing the element diffusion from the titanium substrate. In addition, the first layer 2a formed of titanium oxide, titanium carbide, or titanium nitride acts as a hardened layer so as to improve the contact characteristics with a magnetic head.

Where the first layer 2a, which is in direct contact with the substrate, of the underlying film 2 is formed of a material selected from the group consisting of titanium oxide, titanium carbide and titanium nitride, it is possible to form the first layer 2a by applying an oxidizing treatment, a carbiding treatment or a nitriding treatment to the surface of the titanium substrate. In this case, it is reasonable to understand that the substrate of the magnetic disk includes the titanium oxide film, titanium carbide film or the titanium nitride film.

Where a film of titanium oxide, titanium carbide or titanium nitride is formed on a titanium plate so as to provide a substrate of a magnetic disk, a very big merit can be obtained that texturing of the substrate is facilitated. The texturing, in which fine grinding grooves are formed on the surface of the magnetic disk substrate by applying a grinding tape, is intended to prevent a sticking problem, which is brought about in the case of employing a CSS (Contact Start Stop) system described later, so as to improve the CSS characteristics. The sticking is an adsorption phenomenon which takes place between a magnetic head and the magnetic layer of a magnetic disk in the case where the clearance between the magnetic head and the magnetic layer is diminished. As described above, the sticking problem, i.e., the adsorption, can be prevented by applying a texturing treatment to the substrate. In general, it is difficult to work a titanium material, making it difficult to apply a texturing treatment to the titanium substrate 1. In the present invention, however, a film of titanium oxide, titanium carbide or titanium nitride is formed on the surface of the titanium substrate, with the result that the substrate has a hard surface layer so as to facilitate the texturing treatment.

The term CSS characteristics denotes the repeating characteristics in the case of employing a CSS system. In the CSS system, the magnetic head is held in contact with the magnetic film in starting the operation for the recording-reproducing of information. Then, the magnetic disk is rotated at a predetermined speed so as to cause the magnetic head to float from the magnetic film, and the recording-reproducing is performed under this condition. The CSS system is employed in general in a magnetic disk. The CSS characteristics are evaluated in terms of the number of possible repeating operations of CSS. Of course, it is desirable to increase the possible repeating operations noted above for improving the CSS characteristics.

Where a substrate of a magnetic disk is prepared by forming a titanium oxide film on the surface of a titanium plate, the thickness of the titanium oxide film should desirably fall within a range of between 100 Å and 6000 Å. The maximum surface roughness $R_{max}$ of the titanium oxide film should desirably be 0.12 microns or less. Further, it is desirable for the titanium oxide film surface to be provided with projections having a peak height of 0.01 to 0.06 micron at a rate of 50 to 100 projections/mm in the length of the titanium oxide film. Where the titanium oxide film formed on the titanium substrate satisfies the conditions given above, the sticking problem can be prevented even if the floating amount of the magnetic head is as small as, for example, only 0.075 micron. Naturally, the CSS characteristics can be markedly improved. For example, the number of possible repeating operations of CSS is 15,000 or more.

The conditions given above can be satisfied by subjecting the surface of a titanium plate to an anodic oxidation under predetermined conditions. In other words, it is possible to form desired irregularities on the surface of a substrate of a magnetic disk by subjecting the substrate to an anodic oxidation under predetermined conditions.

Where a substrate of a magnetic disk is prepared by forming a titanium oxide film on the surface of a titanium plate, it is also possible to apply a mechanical texturing treatment in place of the anodic oxidation to the titanium oxide film formed on the substrate so as to form desired irregularities on the surface of the titanium oxide film. Of course, the sticking problem can be prevented in the case of applying the mechanical texturing treatment, as described previously.

Any magnetic material used in general in this technical field can be used for forming the magnetic film 3, though it is desirable to use Co system alloy in view of the characteristics as a magnetic recording medium.

In the magnetic disk shown in Fig. 1, a protective film 4 for protecting the magnetic film 3 and a lubricating film 5 for achieving lubrication with a magnetic head are formed in this order on the magnetic film 3. In the present invention, however, these protective film 4 and the lubricating film 5 are not absolutely necessary in terms of the function of the magnetic disk. For example, it is possible to eliminate the protective film 4 such that the lubricating film 5 is in direct contact with the magnetic film 3. Alternatively, it is possible to eliminate each of these protective film 4 and the lubricating film 5. In general, the protective film is formed of carbon. On the other hand, the lubricating film is formed of liquid lubricating agent (it is in past-like).

It is possible for each of the chromium film, titanium oxide film, titanium carbide film and titanium nitride film, which constitute the underlaying film, to contain small amounts of additives. In short, it suffices for each of these films to be formed essentially of chromium or titanium compounds noted above.

Example 1

Magnetic disks were prepared by forming various underlaying films shown in Table 1 on the surface of a pure titanium substrate having a diameter of 2.5 inches and a thickness of 0.635 mm, followed by forming a Co-Cr-Ta magnetic film on the underlaying film and subsequently forming a carbon protective film and a lubricating film in this order on the magnetic film. The magnetic film was formed by means of sputtering technique. The sputtering technique was also employed for forming a chromium film acting as an underlaying film. On the other hand, a titanium oxide layer, a titanium carbide layer or a titanium nitride layer, which is surved as the first layer of the underlaying film in direct contact with the titanium substrate, was formed by applying an oxidizing treatment, a carbiding treatment or a nitriding treatment to the surface of the titanium substrate. In performing the sputtering operation for forming the magnetic film, the substrate temperature was kept constant at 300°C. In forming the underlying layers, however, the film-forming temperatures were changed.

Measured were electromagnetic properties of the magnetic disks thus prepared. Table 1 shows the results. The noise characteristics shown in Table 1 were determined in terms of SN ratio (signal/noise ratio) under 30 kfci. Naturally, the increase in the value shown in Table 1 denotes improvement in the noise characteristics of the magnetic disk. Incidentally, sample No. 1 shown in Table 1 denotes a control case in which the underlying layer consists of a single layer.

Table 1

| Sample No. | Underlaying film | Film thickness (Å) | Film-forming temp. (°C) | Substrate surface roughness Rmax (μm) | Sn ratio (dB) |
|---|---|---|---|---|---|
| 1 | Cr film | 500 | Ni-P plating on substrate | | 30 |
| 2 | Cr film first layer<br>second layer | 200<br>300 | room temp.<br>300 | 0.05 | 40 |
| 3 | Cr film first layer<br>second layer | 20<br>400 | room temp.<br>300 | 0.04 | 33 |
| 4 | Cr film first layer<br>second layer | 30<br>400 | room temp.<br>300 | 0.05 | 36 |
| 5 | Cr film first layer<br>second layer | 200<br>400 | room temp.<br>300 | 0.08 | 35 |
| 6 | Cr film first layer<br>second layer | 200<br>300 | room temp.<br>300 | 0.09 | 33 |
| 7 | Cr film first layer<br>second layer | 1200<br>300 | room temp.<br>300 | 0.03 | 33 |
| 8 | TiN film first layer<br>Cr film second layer | 250<br>500 | ---<br>300 | 0.04 | 36 |
| 9 | TiC film first layer<br>Cr film second layer | 200<br>500 | ---<br>300 | 0.04 | 36 |

(Continued)

| Sample No. | Underlaying film | Film thickness (Å) | Film-forming temp. (°C) | Substrate surface roughness Rmax (μm) | Sn ratio (dB) |
|---|---|---|---|---|---|
| 10 | TiOx film first layer<br>Cr film second layer | 250<br>500 | ---<br>300 | 0.04 | 34 |
| 11 | Cr film first layer<br>second layer<br>third layer | 200<br>200<br>300 | room temp.<br>150<br>300 | 0.06 | 40 |
| 12 | TiOx film first layer<br>Cr film second layer | 100<br>600 | ---<br>250 | 0.04 | 35 |
| 13 | TiOx film first layer<br>Cr film second layer | 500<br>600 | ---<br>250 | 0.04 | 37 |
| 14 | = | 1000<br>600 | ---<br>250 | 0.04 | 37 |
| 15 | = | 2000<br>600 | ---<br>250 | 0.04 | 38 |
| 16 | = | 3000<br>600 | ---<br>250 | 0.04 | 38 |
| 17 | = | 5000<br>600 | ---<br>250 | 0.04 | 38 |
| 18 | = | 3000<br>600 | ---<br>250 | 0.08 | 35 |
| 19 | = | 3000<br>600 | ---<br>250 | 0.10 | 33 |

As apparent from Table 1, sample No. 1 (control case), in which the underlying layer was formed of a single layer, was poor in noise characteristics, i.e., the SN ratio (signal/noise ratio) was as low as only 30 dB. In any of the other samples falling within the technical scope of the present invention, however, the SN ratio was found to be higher than that for the control case, i.e., 30 dB. In other words, the experimental data shown in Table 1 support the effect of the present invention in terms of the noise characteristics. It has also been confirmed that the effect of the present invention can be further enhanced, if the maximum surface roughness $R_{max}$ of the substrate is 0.08 micron or less.

Samples Nos. 3 and 4 shown in Table 1 denotes that the noise characteristics of the magnetic disks can be prominently enhanced where the first layer, which is in direct contact with the substrate, of the underlying film has a thickness of at least 30 Å.

Incidentally, the noise characteristics of the magnetic disk samples prepared in Example 1 were found to be more satisfactory than those of the conventional magnetic disk using an Aℓ-based substrate.

In Example 1 described above, the magnetic film was formed by means of suppering with the substrate temperature maintained at 300°C. However, the similar effect can be obtained even if the substrate temperature noted above is lower than 300°C.

Example 2

In this example, the first layer of the underlying film was formed of titanium oxide. In preparing the samples of this type, an anodic oxidation was applied to a pure titanium plate having a thickness of 1.37 mm, a diameter of 3.5 inches, and the maximum surface roughness $R_{max}$ of 0.02 to 0.1 micron so as to form a titanium oxide film on the surface of the titanium plate. In performing the anodic oxidation, an aqueous solution containing 0.1% by volume of phosphoric acid was used as an electrolyte. Also, an anodic oxidation voltage of 0 to 200 V was applied between a pure titanium plate acting as a cathode and the titanium plate acting as an anode and used as the substrate of the magnetic disk. During application of the anodic oxidation voltage, these cathode and anode were dipped in electrolyte and disposed apart from each other by 25 mm.

After formation of the titanium oxide film on the titanium substrate, a chromium film was formed on the titanium oxide film in a thickness of 500 to 1500 Å by means of the sputtering technique, followed by forming a Co-Cr series magnetic film 500 Å thick on the chromium film. Further, a carbon protective film and a lubricating film were formed in this order on the magnetic film so as to obtain a desired magnetic disk.

The noise characteristics of the magnetic disk samples (Nos. 21 to 32) thus prepared were evaluated. These samples were found to exhibit an SN ratio as high as 33 to 45 dB.

The magnetic disk samples Nos. 21 to 32 were, subjected to a gliding test and a CSS test. In the gliding test, the titanium disk substrate was rotated at 3600 rpm so as to permit the magnetic head to run floating by 0.075 micron from the substrate for detecting small projections formed on the substrate. An AE sensor was used for detecting the projections. In the CSS test, CSS operations were repeatedly carried out 15,000 times, followed by measuring the coefficient of friction. The CSS characteristics of the sample was determined to be satisfactory where the coefficient of friction of the sample was found to less than 0.5.

Table 2 shows the thickness of the thin film included in the magnetic disk substrate, the number of projections formed on the surface of the thin film per 1 mm in length, said projections having a peak height falling within a range of between 0.01 micron and 0.06 micron, and the maximum surface roughness $R_{max}$ of the thin film, as well as the results of the gliding test and the CSS test applied to the prepared magnetic disk samples. Table 2 also shows the overall evaluation. The evaluation "good" shown in Table 2 denotes that the sample was satisfactory in any of the tests, with "poor" denoting that the sample was not satisfactory in some of the tests.

Table 2

| Sample No. | Thickness of thin film (Å) | The number of peaks per 1 mm in length | Maximum peak height (μm) | Presence of projection in gliding test | Coefficient of friction after CSS test | Overall evaluation |
|---|---|---|---|---|---|---|
| 21 | 50 | 150 | 0.04 | Present | $> 0.5$ | poor |
| 22 | 90 | 250 | 0.04 | " | $> 0.5$ | " |
| 23 | 100 | 200 | 0.03 | None | $< 0.5$ | good |
| 24 | 3000 | 40 | 0.02 | " | $> 0.5$ | poor |
| 25 | 3000 | 300 | 0.03 | " | $< 0.5$ | good |
| 26 | 3000 | 800 | 0.05 | " | $< 0.5$ | good |
| 27 | 3000 | 800 | 0.07 | " | $> 0.5$ | poor |
| 28 | 3000 | 1000 | 0.06 | " | $< 0.5$ | good |
| 29 | 3000 | 1200 | 0.08 | Present | $> 0.5$ | poor |
| 30 | 6000 | 400 | 0.05 | None | $< 0.5$ | good |
| 31 | 6000 | 500 | 0.07 | " | $> 0.5$ | poor |
| 32 | 10000 | 500 | 0.09 | Present | $> 0.5$ | poor |

As apparent from Table 2, projections are not detected in the gliding test where the anodized $TiO_x$ thin film formed on the titanium substrate has a thickness falling within a range of between 100 and 6000 Å, and 50 to 1000 projections per 1 mm of the thin film. In this case, the coefficient of friction in the CSS test is smaller than 0.5. It follows that satisfactory CSS characteristics can be obtained even if the floating amount of the magnetic head is 0.1 micron or less.

**Claims**

1. A magnetic disk comprising a non-magnetic substrate (1), an ynderlying film (2) formed on the substrate (1), and a magnetic film (3) formed on the ynderlying film (2), in which the non-magnetic substrate (1) is formed of titanium or a titanium-based alloy, and the ynderlying film (2) is of a laminate structure of at least two layers (2a, 2b).

2. The magnetic disk according to claim 1, characterized in that the maximum surface roughness $R_{max}$ of the non-magnetic substrate (1) is 0.08 micron or less.

3. The magnetic disk according to claim 1, characterized by further comprising a lubricating film (5) formed on the magnetic film (3).

4. The magnetic disk according to claim 3, which characterized by further comprising a protective film (4) formed between the magnetic film (3) and the lubricating film (5).

5. The magnetic disk according to claim 1, characterized in that a first layer (2a) of the ynderlying film (2) in direct contact with the substrate (1) has a thickness falling within a range of between 30 Å and 10,000 Å.

6. The magnetic disk according to claim 1, characterized in that said first layer (2a) of the ynderlying film (2) in direct contact with the substrate is formed of one material selected from the group consisting of titanium oxide, titanium carbide and titanium nitride.

7. The magnetic disk according to claim 1, characterized in that the ynderlying film (2) comprises a plurality of chromium layers (2a, 2b).

8. The magnetic disk according to claim 7, characterized in that said plurality of chromium layers (2a, 2b) are equal to each other in composition and are formed under different temperatures.

9. A magnetic disk substrate, comprising
a plate (1) of titanium or titanium-based alloy and a titanium oxide film (2a) formed on said titanium plate (1), said titanium oxide film (2a) having a thickness falling within a range of between 100 and 6000 Å, a maximum surface roughness $R_{max}$ of 0.12 micron or less, and 50 to 1,000 projections per 1 mm in length, said projections having a peak height falling within a range of between 0.01 and 0.06 micron.

F I G . 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 402 568 (NKK CORPORATION) 19 December 1990 | 1,7 | G11B5/64 |
| A | * page 4, line 54 - page 5, line 14 *<br>* page 6; table 1 *<br>* claims 1-3 * | 5,8 | G11B5/704 |
| X | PATENT ABSTRACTS OF JAPAN<br>vol. 12, no. 406 (P-777)27 October 1988<br>& JP-A-63 142 521 ( NHK SPRING CO LTD ) 14 June 1988 | 1 | |
| A | * abstract * | 6 | |

TECHNICAL FIELDS
SEARCHED (Int. Cl.5 )

G11B

The present search report has been drawn up for all claims

| Place of search | Date of completion of the search | Examiner |
|---|---|---|
| THE HAGUE | 14 SEPTEMBER 1992 | KLOCKE S. |

EPO FORM 1503 03.82 (P0401)